(19) Europäisches Patentamt
European Patent Office
Office européen des brevets

(11) Veröffentlichungsnummer: **0 269 840**
**A2**

(12) # EUROPÄISCHE PATENTANMELDUNG

(21) Anmeldenummer: 87115571.9

(22) Anmeldetag: 23.10.87

(51) Int. Cl.⁴: C08G 65/30 , C08G 65/32 , C08G 59/66

(30) Priorität: 31.10.86 DE 3637151

(43) Veröffentlichungstag der Anmeldung: 08.06.88 Patentblatt 88/23

(84) Benannte Vertragsstaaten: AT BE CH DE ES FR GB GR IT LI LU NL SE

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Artiga González, Renè-Andrés, Dr.**
**Bilker Allee 10**
**D-4000 Düsseldorf(DE)**
Erfinder: **Emmerling, Winfried, Dr.**
**Lärchenweg 6**
**D-4006 Erkrath(DE)**
Erfinder: **Krause, Werner**
**Wipperfürther Strasse 1**
**D-4000 Düsseldorf(DE)**
Erfinder: **Podola, Tore**
**Deusserstrasse 31**
**D-4019 Monheim(DE)**
Erfinder: **Neitzer, Klaus**
**Leo-Baeck-Strasse 47**
**D-4000 Düsseldorf(DE)**

(54) **Verfahren zur Herstellung und Reinigung SH-terminierter Prepolymerer und Verwendung der Produkte.**

(57) Die Erfindung betrifft ein Verfahren zur Herstellung und Reinigung SH-terminierter Prepolymerer durch Umsetzung von Polyhydroxyverbindungen aus Addukten von Ethylenoxid und/ oder Propylenoxid an Triole oder Tetraole (Glycerin, Trimethylolpropan, Pentaerythrit) mit Thioalkancarbonsäuren, wobei auf ein Äquivalent der OH-Gruppen ein Mol Thiocarbonsäure entfällt, und anschließende Zugabe von Neutralisationsmittel in einer Menge, die geeignet ist, die nicht umgesetzte Menge der Thioalkancarbonsäure zu neutralisieren, gleichzeitig mit dem Zusatz des Neutralisationsmittels oder unmittelbar danach eine oder mehrere das Neutralisationswasser bindende Verbindungen sowie ein koagulierendes saures Hilfsmittel im Überschuß zusetzt, und das Rekationsgemisch auf an sich bekannten Wegen von den ausgefallenen und zugesetzten Feststoffen befreit und das Prepolymer gewünschtenfalls isoliert.

EP 0 269 840 A2

## Verfahren zur Herstellung und Reinigung SH-terminierter Prepolymerer und Verwendung der Produkte

Die Erfindung betrifft ein Verfahren zur Herstellung und Reinigung SH-terminierter Prepolymerer, die beispielsweise aus einem Polyetherpolyol und einer Thioalkansäure zugänglich sind, und die Verwendung der bei der Umsetzung nach dem Reinigungsschritt erhaltenen Produkte.

Verfahren zur Herstellung von SH-terminierten Polyetherpolyol-Derivaten sind aus dem Stand der Technik seit längerer Zeit wohlbekannt. Derartige Verbindungen entstehen üblicherweise durch Umsetzung von Polyetherpolyolen und bifunktionellen, eine SH-Funktion aufweisenden Verbindunge, wie sie beispielsweise Mercapto-Gruppen enthaltende Nitrile, Carbonsäuren, Carbonsäureamide, Carbonsäurehalogenide usw. darstellen. Derartige Produkte finden beispielsweise Anwendung im Bereich der Versiegelungs-und Beschichtungsmittel, im Bereich der Modifikation von synthetischen oder natürlichen Fasern, sowie als Hilfsmittel im Baubereich.

So werden in der DE-OS 21 32 535 SH-terminierte Polymere sowie ein Verfahren zur Modifikation synthetischer, von keratinhaltigen Materialien freier Fasern unter Verwendung derartiger Polymere beschrieben, die beispielsweise aus Polyolen und Thioalkansäuren zugänglich sind. Die in der genannten Druckschrift beschriebenen Polythiole fallen im Laufe des Herstellungsverfahrens in Form von Emulsionen an, die nachfolgend unmittelbar auf die Fasern aufgebracht werden und dadurch nicht isoliert werden müssen. Aufgrund der dem Syntheseschritt nachgelagerten Reaktion des Auftrags der Polythiole auf die Fasern ist zudem eine genaue Kontrolle des Umsetzungsgrades insofern nicht erforderlich, als nur die aus Polyol und Thioalkancarbonsäure entstehenden Polythiole auf die Fasern aufziehen; diese Reaktion wird durch dem Reaktionsgemisch zuzusetzende zusätzliche Komponenten gesteuert. Es ergab sich im Rahmen des durch die genannte Druckschrift vorgeschlagenen Verfahrens nicht die Notwendigkeit, definierte Produkte mit bestimmten charakteristischen Eigenschaften, beispielsweise Säurezahlen unterhalb einer bestimmten Grenze, zu erhalten.

In der US-PS 3 549 565 wird ein Verfahren zur Herstellung elastomerer Materialien durch Umsetzung von Mercaptogruppen enthaltenden Polyesterpolyethern und mindestens einer organischen Dimercaptoverbindung in Gegenwart von oxidativ wirkenden Vernetzern, wie beispielsweise Bleidioxid oder Zinkoxid, Die in die Vernetzungsreaktion einzusetzenden, Mercaptogruppen enthaltenden Polyesterpolyether werden dabei in Form eines Prepolymers eingesetzt, das aus einem Polyhydroxypolyether und einer Mercaptoalkancarbonsäure herzustellen ist. Zwar wird entsprechend der genannten Druckschrift durch stöchiometrischen Einsatz der Ausgangsstoffe versucht, eine vollständige Umsetzung insoweit sicherzustellen, als keine sauren Reaktions partner unumgesetzt im Reaktionsgemisch verbleiben, die später die vernetzende Wirkung der basischen Schwermetalloxide beeinträchtigen könnten; das in der Druckschrift beschriebene Auswaschverfahren, das auch sonst im Stand der Technik angewandt wird und eine weitgehende Beseitigung des verbleibenden Säureüberschusses sicherstellen soll, führt jedoch zu technischen Schwierigkeiten: Es entstehen als Produktgemisch Emulsionen, die die Reproduzierbarkeit der Güte des erhaltenen Prepolymeren in Frage stellen. Eine unvollständige Entfernung der als Ausgangsstoff in die Reaktion eingesetzten Thioalkancarbonsäure führt jedoch zwangsläufig zur Bildung schlechterer, den Anforderungen nicht genügender elastomerer Materialien. Derartige verschlechterte Eigenschaften (je nach Anwendungsbereich der Produkte) sind beispielsweise eine geringere Härte oder eine verschlechterte Elastizität.

Vergleichbar mit dem oben in der US-PS 3 549 565 beschriebenen Verfahren ist das vom selben Anmelder in der US-PS 3 931 078 beschriebene Verfahren zur Herstellung vergleichbarer Verbindungen, die sich auch in Zusammensetzungen zur Oberflächenbeschichtung und -versiegelung einsetzen lassen. Zur oxidativen Vernetzung der Mercaptograuppen werden ebenfalls basische Schwermetallsalze oder -oxide verwendet, deren Anfälligkeit gegen in der Reaktionsmischung verbliebene Säurereste groß ist. Auch in diesem Verfahren ist eine vollständige Entfernung überschüssiger Säure angestrebt, läßt sich jedoch mit den vorgeschlagenen Verfahrensmaßnahmen des Auswaschens über eine Emulsion nicht oder nur unvollständig realisieren.

Aufgabe der vorliegenden Erfindung war es, ein einfaches und preisgünstiges Verfahren zur Herstellung und insbesondere auch Reinigung SH-terminierter Prepolymerer zugänglich zu machen und damit säurefreie oder zumindest nahezu säurefreie Produkte zu schaffen, die anschließend problemfrei mit den als Vernetzer verwendeten Schwermetalloxiden oder -salzen umgesetzt werden können. Dabei sollten die Nachteile des Standes der Technik, insbesondere die unzureichende Entfernung der überschüssigen Thioalkancarbonsäure, dadurch beseitigt werden, daß in das Herstellungsverfahren ein einfacher und wenig aufwendiger, dafür aber doch effizienter Reinigungsschritt eingebaut wird. Damit sollten die durch dieses Verfahren erhältlichen Produkte einem weiteren Anwendungsbereich, nämlich der Verwendung der Prepolymere in Fugendichtungsmassen, zugänglich gemacht werden. Die erfindungsgemäß aus diesen Fugendichtungsmassen erhältlichen Prepolymeren sollten nach der Aushärtung einen niedrigen Elastizitätsmodul und eine klebfreie Oberfläche aufweisen. Die erhältlichen Prepolymere sollten jedoch auch solche Eigenschaften aufweisen, daß man sie zur Herstellung von Epoxidharzen verwenden kann und im Zuge der Herstellung derartiger Harze der Einsatz dünnflüssiger Prepolymerer wegen der besseren Handhabbarkeit bevorzugt wird.

Überraschend wurde nun gefunden, daß durch unmittelbare Umsetzung bestimmter Triole und/oder Tetraole mit bestimmten Thioalkansäuren in einem solchen Molverhältnis, daß jeder Hydroxygruppe eine esterbildende Carboxylgruppe gegenübersteht, eine Gruppe von Prepolymeren erhalten werden kann, die die an sie gestellten Anforderungen in vollem Umfang erfüllt. Das zu diesen Produkten führende Verfahren bedient sich zudem eines einfachen Neutralisationsschrittes und entfernt daher nicht umgesetzte Überschüsse der Thioalkancarbonsäure soweit, daß die Säurezahl des Prepolymeren für die weitere Vernetzungsreaktion ohne weiteres geeignet ist.

Die Erfindung betrifft ein Verfahren zur Herstellung und Reinigung SH-terminierter Prepolymerer durch Umsetzung von Polyhydroxyverbindungen mit Thioalkancarbonsäuren, das dadurch gekennzeichnet ist, daß man ein oder mehrere Addukte von Ethylenoxid und/oder Propylenoxid an Triole oder Tetraole der allgemeinen Formel (I)

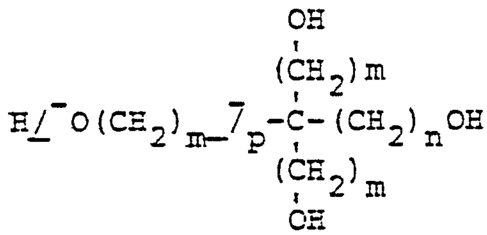

(I)

in der
m für die Zahlen 1, 2 oder 3,
n für die Zahlen 0, 1 oder 2 und
p für 0 oder 1 stehen,

mit einer Molekularmasse im Bereich von 400 bis 10 000 mit einer oder mehreren Thialkancarbonsäuren der allgemeinen Formel (II)

HS-R-COOH (II)

in der R für einen geradkettigen oder verzweigten Alkylenrest mit 1 bis 8 C-Atomen steht, in einem solchen Molverhältnis umsetzt, daß 1 mol der Thioalkancarbonsäuren (II) einem Äquivalent der OH-Gruppen in der Verbindung (I) gegenübersteht, der Reaktionsmischung ein Neutralisationsmittel in einer Menge zusetzt, die geeignet ist, die nicht umgesetzte Menge der Thioalkancarbonsäure (II) zu neutralisieren, gleichzeitig mit dem Zusatz des Neutralisationsmittels oder unmittelbar danach eine das Neutralisationswasser bindende Verbindung sowie ein Fällungsmittel im Überschuß zusetzt, und das Reaktionsgemisch auf an sich bekannten Wegen von den ausgefallenen und zugesetzten Feststoffen befreit und das Prepolymer gewünschtenfalls isoliert.

Die Erfindung betrifft außerdem die Verwendung der entsprechend dem obigen Verfahren erhältlichen Prepolymeren in selbsthärtenden Fugendichtungsmassen und Epoxidharzsystemen.

Entsprechend dem erfindungsgemäßen Verfahren werden als Ausgangsstoffe für die Herstellung der SH-terminierten Prepolymeren Addukte von Ethylenoxid und/oder Propylenoxid an Triole oder Tetraole der allgemeinen Formel (I)

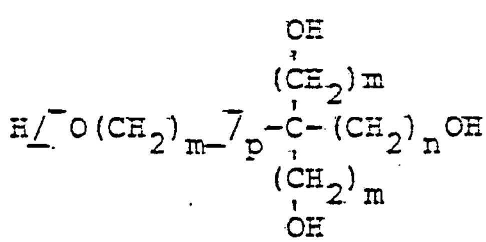

(I)

in der
m für die Zahlen 1, 2 oder 3,
n für die Zahlen 0, 1 oder 2 und
p für 0 oder 1 stehen,

eingesetzt.

Derartige Addukte entstehen auf an sich aus dem Stand der Technik bekannte Art und Weise dadurch, daß man Triole oder Tetraole der oben genannten allgemeinen Formel (I) mit den angegebenen Bedeutungen durch Zusatz von Ethylenoxid und/oder Propylenoxid ethoxyliert und/oder propoxyliert. Als Triole oder Tetraole der obigen allgemeinen Formel (I) kommen dabei eine Vielzahl von für diesen Zweck dem Fachmann geläufigen Polyhydroxyverbinedngen in Frage, von denen beispielhaft und im Sinne einer bevorzugten Ausführungsform Glycerin, Trimethylolpropan und Pentaerythrit genannt seien, also Verbindungen, die drei oder vier Hydroxygruppen im Molekül besitzen. Es sind jedoch auch andere Triole oder Tetraole geeignet, sofern sie der obigen allgemeinen Formel (I) entsprechen.

Durch die (auf an sich bekannten Wegen, beispielsweise in Gegenwart oder in Abwesenheit eines Lösungsmittels bzw. bei Normaldruck oder erhöhtem Druck, vorzunehmende) Umsetzung der genannten Triole oder Tetraole mit Ethylenoxid und/oder Propylenoxid entstehen durch Einschub von Ethoxy-bzw. Propoxygruppen in die O-H-Bindung der genannten Triole bzw. Tetraole ethoxylierte bzw. propoxylierte Derivate der Triole oder Tetraole der obigen allgemeinen Formel (I), deren Gehalt an Ethoxy-bzw. Propoxygruppen von den Reaktionsbedingungen im einzelnen, d.h. vom Molverhältnis der eingesetzen Edukte, vom Druck bzw. von der Temperatur, bei der die Reaktion durchgeführt wird und von der Reaktivität der einzelnen polaren Gruppen der Triole oder Tetraole der allgemeinen Formel (I) abhängt. Bevorzugt werden in dem erfindungsgemäßen Verfahren Addukte von Propylenoxid an Triole oder Tetraole der obigen allgemeinen Formel (I) verwendet. Dies ist damit zu er klären, daß normalerweise die propoxylierten Derivate der genannten Triole oder Tetraole eine bessere Hydrolysestabilität aufweisen. Unbeschadet dieser Tatsache sind jedoch auch Triole oder Tetraole, also Derivate der Verbindungen der allgemeinen Formel (I) verwendbar, die mit Ethylenoxid oder Mischungen aus Ethylenoxid und Propylenoxid erhalten werden können. Dabei ist es ohne weiteres möglich, als Ausgangsstoffe des erfindungsgemäßen Verfahrens Einzelverbindungen genau definierter Struktur und Molekularmasse einzusetzen; in großindustriellen Verfahren entstehen jedoch üblicherweise Produktgemische einer mehr oder weniger großen Molekularmassenbreite bzw. einer mehr oder weniger großen Breite an ethoxylierten bzw. propoxylierten Seitenketten, so daß bevorzugt als Ausgangsstoffe Mischungen der wie oben beschrieben hergestellten Triole bzw. Tetraole eingesetzt werden.

Als besonders bevorzugt für das erdinungsgemäße Verfahren sind Triole anzusehen, die von Glycerin abstammen, da dieses auch als Ausgangsstoff in großen Mengen preiswert zur Verfügung steht, ja sogar als Nebenprodukt bei anderen industriellen Verfahren in großen Mengen anfällt und dadurch einer bevorzugten Verwertung zugeführt werden kann. Glycerin wird dabei in einer weiteren bevorzugten Ausführungsform mit Propylenoxid alkoxyliert; die resultierenden Triole weisen eine ausgezeichnete Eignung für Prepolymere mit der erfindungsgemäß bevorzugten Verwendung auf.

Die in das erfindungsgemäße Verfahren üblicherweise eingesetzten Triole und/oder Tetraole, die von den Triolen oder Tetraolen der oben genannten all gemeinen Formel (I) abstammen, weisen üblicherweise eine Molekularmasse im Bereich von 400 bis 10 00 auf. Entsprechend der erfindungsgmeäßen Verwendung sind niedrige Molekularmassen besonders günstig für selbsthärtende Epoxidharzsysteme, während Molekularmassen an der oberen Grenze des genannten Bereichs günstiger zur Verwendung in hochelastischen Fugendichtungsmassen sind. Entsprechend der angestrebten erfindungsgemäßen Verwendung lassen sich also durch eine vorherige Auswahl der geeigneten Molekularmassen Produkte erhalten, die genau dem späteren Anforderungsprofil entsprechen. In einer bevorzugten Ausführungsform des erfindungsgemäßen Verfahrens setzt man Addukte von Ethylenoxid und/oder Propylenoxid an Triole oder Tetraole der allgemeinen Formel (I) ein, die eine Molekularmasse im Bereich von 2 000 bis 7 000 aufweisen. Derartige Verbindungen lassen sich besonders gut den angestrebten Verwendungen in selbsthärtenden Epoxidharzsystemen bzw. elastischen Fugendichtungsmassen zuführen. Besonders geeignet, weil mit dem Resultat ausgezeichneter Verwendungseigenschaften, sind Triole oder Tetraole aus der Gruppe Glycern, Trimethylolpropan und Pentaerythrit, bevorzugt Glycerin, die mit Ethylenoxid und/oder Propylenoxid, bevorzugt mit Propylenoxid, zu Addukten mit einer Molekularmasse im Bereich von 2 000 bis 7 000 umgesetzt wurden.

Die genannten Addukte werden entsprechend dem erfindungsgemäß beanspruchten Verfahren mit einer oder mehreren Thioalkancarbonsäuren der allgemeinen Formel (II) umgesetzt,

HS-R-COOH (II)

in der R für einen geradkettigen oder verzweigten Alkylenrest mit 1 bis 8 C-Atomen steht. Als zweite Reaktionskomponente fungiert also eine Thioalkancarbonsäure der oben genannten allgemeinen Formel, wobei von den unter diese Formel fallenden Verbindungen eine oder auch mehrere als Umsetzungspartner für die Addukte fungieren können. Bevorzugt werden solche Umsetzungen gemäß dem erfindungsgemäßen Verfahren, bei denen sie mit einer Thioalkancarbonsäure der allgemeinen Formel (II) umgesetzt werden.

In der oben genannten allgemeinen Formel steht R für einen geradkettigen oder verzweigten Alkylenrest mit 1 bis 8 C-Atomen, wobei unter diese Definition die Reste Methylen, Ethylen, Propylen, Tetramethylen, Pentamethylen, Hexamethylen oder Heptamethylen sowie deren verzweigtkettige Isomere fallen können. Aus dieser Gruppe sind als zweite Reaktionskomponente für das erfindungsgemäße Verfahren die Verbindungen der allgemeinen Formel (II) bevorzugt, die einen geradkettigen Rest R aufweisen. Von den genannten Resten sind die Reste Methylen, Ethylen, Propylen und Tetramethylen besonders bevorzugt; Umsetzungen der erfindungsgemäßen Art mit einer Thioalkancarbonsäure der allgemeinen Formel (II), in der R für einen geradkettigen Alkylenrest mit 1 bis 4 C-Atomen steht, ergeben Prepolymere mit ausgezeichneten Verwendungseigenschaften in den unten angegebenen Verwendungsbereichen. Aus der Zahl dieser Thioalkancarbonsäuren hat sich Thioglykolsäure (= Thioessigsäure), also die Thioalkancarbonsäure der allgemeinen Formel (II), in der R für einen Methylenrest steht, als besonders vorteilhaft bewährt.

Für den ersten Schritt der erfindungsgemäßen Umsetzung zur Herstellung SH-terminierter Prepolymerer wird ein Molverhältnis der beiden Reaktionspartner Alkylenoxidaddukt : Thioalkancarbonsäure (II) gewählt, das mehr oder weniger so eingestellt ist, daß ein Mol der Thioalkancarbonsäure (II) einem Äquivalent OH-Gruppen in der ursprünglich eingesetzten Verbindung (I) gegenübersteht. Wird also ein Triol der allgemeinen Formel (I) eingesetzt und mit Ethylenoxid und/oder Propylenoxid alkoxyliert, so daß daraus auch wieder ein Triol resultiert, muß ein Molverhältnis Addukt : Thioalkancarbonsäure (II) von ungefähr 1 : 3 eingesetzt werden. Dabei wird üblicherweise ein geringer Überschuß an-Thioalkancarbonsäure (II) verwendet, um eine möglichst vollständige Umsetzung sicherzustellen. Säureüberschüsse können, wie nachfolgend weiter als wesentlicher Vorteil des erfindungsgemäßen Herstellungs-und Reinigungsverfahrens aufgezeigt wird, bequem in einem nachgelagerten einfachen Verfahrensschritt vollständig und schadlos beseitigt werden. Wird jedoch als Ausgangsstoff ein Tetraol der allgemeinen Formel (I) eingesetzt und mit Ethylenoxid und/oder Propylenoxid alkoxyliert, so resultiert daraus wiederum ein Tetraol, das für das erfindungsgemäße Verfahren ein Molverhältnis der Ausgangsstoffe Makrotetraol : Thioalkancarbonsäure (II) von ungeführ 1 : 4 erfordert; hinsichtlich des geringen Säureüberschusses gilt das vorher Ausgeführte.

Die Kondensationsreaktion zwischen dem Alkylenoxidaddukt und der Thialkancarbonsäure der allgemeinen formel (II) ist eine an sich aus dem Stand der Technik bekannte Veresterungsreaktion, in der die Hydroxygrup pen der Hydroxyverbindung mit der Carboxylgruppe der Verbindung (II) verestert werden. Diese Veresterungsreaktion wird unter Bedingungen durchgeführt, wie sie aus dem Stand der Technik üblicherweise für derartige Reaktionen bekannt sind. Dies bedeutet, daß die Veresterung in Gegenwart oder auch in Abwesenheit eines Lösungsmittels durchgeführt werden kann. Üblicherweise wird ein Veresterungskatalysator zugesetzt; dem Fachmann sind dazu außer p-Toluolsulfonsäure auch noch weitere Verbindungen als wirksame Veresterungskatalysatoren bekannt. Bevorzugt wird die Reaktion in einem Lösungsmittel durchgeführt, das vergleichsweise hoch siedet und ein Azeotrop mit dem bei der Umsetzung entstehenden Kondensationswasser bildet. Als solche Lösungsmittel kennt der Fachmann beispielsweise Toluol, o-Xylol, p-Xylol, Mischungen derartiger Xylole oder auch Mischungen der genannten Xylole mit Toluol. Mit Hilfe der genannten Lösungsmittel läßt sich das im Zuge der Reaktion gebildete Kondensationswasser leicht auskreisen; bei Verwendung eines sogenannten "Wasserabscheiders" in der Reaktionsapparatur kann der Fortschritt der Veresterungsreaktion sogar anhand des gebildeten Kondensationswassers verfolgt werden.

Die Veresterungsreaktion wird - wie allgemein üblich -bei erhöhter Temperatur durchgeführt; solange nicht die Thermolabilität der entstehenden Polymeren eine niedrigere Reaktionstemperatur erfordert, wird als Reaktionstemperatur üblicherweise die Tempeatur gewählt, die im Siedebereich des verwendeten Lösungsmittels liegt.

Nach Abschluß der Veresterungsreaktion und nach Abscheidung ungefähr der vorausberechneten Wassermenge setzt man in einem zweiten Reaktionsschritt des erfindungsgemäßen Verfahrens der resultierenden Reaktionsmischung ein Neutralisationsmittel in einer Menge zu, die geeignet ist, die nicht umgesetzte Menge der Thioalkancarbonsäure (II) zu neutralisieren. Ja nach dem pH-Wert zum Schluß der Veresterungsreaktion, bzw. nach der Menge an eingesetzter Thioalkancarbonsäure (II) aber auch je nach Dauer und damit Vollständigkeit der Umsetzung, kann dies eine mehr oder weniger große Menge eines Neutralisationsmittel sein; sie geht üblicherweise nicht über ein Äquivalent der eingesetzten Thioalkancarbonsäure (II) hinaus, zumindest dann nicht, wenn die Umsetzung des Alkylenoxidaddukts mit der bzw. den Thioalkancarbonsäuren der allgemeinen Formel (II) mehr oder weniger vollständig durchgeführt wurde. Üblicherweise liegt die Menge an Neutralisationsmittel im Bereich von 0,1 bis 0,5 Äquivalente, bezogen auf die eingesetzte Menge an Thioalkancarbonsäure(n) der allgemeinen Formel (II).

Als Neutralisatonsmittel werden in dem erfindungsgemäßen Verfahren in einer bevorzugten Ausführungsform Alkalimetallhydroxide oder Alkalimetallcarbonate in den oben genannten Mengen zugesetzt. Um eine möglichst geringe Menge an Neutralisationsmittel einsetzen zu können, hat sich Natriumhydroxid selbst bzw. Natronlauge als Neutralisationsmittel bewährt.

Entsprechend dem erfindungsgemäßen Verfahren besteht eine weitere Maßnahme darin, daß man dem

Reaktionsgemisch nach Abschluß der Veresterungsreaktion eine das Neutralisationswasser bindende Verbindung zusetzt. Dies geschieht erfindungsgemäß entweder gleichzeitig mit dem Zusatz des Neutralisationsmittels oder unmit telbar danach; in einer bevorzugten Ausführungsform des Verfahrens wird die das Neutralisationswasser bindende Verbindung der Reaktionsmischung zugesetzt, unmittelbar nachdem man das eventuell vorhandene Thioalkancarbonsäure (II) neutralisierende Mittel zugesetzt hat. Dem Fachmann sind Verbindungen, die in der Lage sind, in der Reaktionsmischung vorhandenes Reaktionswasser zu binden, aus dem Stand der Technik bekannt. Beispielhafte, in dem erfindungsgemäßen Verfahren bevorzugt verwendbare wasserbindende Verbindungen sind die Alkalimetall-und/oder Erdalkalimetallsulfate, mit Vorteil Natriumsulfat und Magnesiumsulfat. Derartige, das Neutralisationswasser bindende Verbindungen, insbesondere Natriumsulfat, werden der Reaktionsmischung solange zugesetzt, bis sie sich erkennbar nicht mehr durch Wasseraufnahme verändern. Damit wird sichergestellt, daß die organische, die SH-terminierten Prepolymeren enthaltende Phase weitestmöglich vom Neutralisationswasser befreit ist und damit die entsprechenden Prepolymeren in quasi wasserfreier Form in der organischen Phase enthalten sind. Erfindungsgemäß ist es möglich, von derartigen das Neutralisationswasser bindenden Verbindungen einzelne einzusetzen; jedoch werden von den beschriebenen Verfahren auch solche Herstellungs-und Reinigungsverfahren umfaßt, in denen zum Entzug des Neutralisationswassers mehrere das Wasser bindende Verbindungen zugesetzt werden.

Gleichzeitig mit der das Neutralisationswasser bindenden Verbindung (bzw. einer Mehrzahl derartiger Verbindungen) oder nach deren Zugabe wird der Reaktionsmischung ein im Reaktionsmedium unlösliches, oberflächlich sauer modifiziertes, die Koagulation förderndes Hilfsmittel im Überschuß zugesetzt. Dieses dient, entsprechend dem erfindungsgemäßen Verfahren, dazu, den gebildten, im Reaktionsmedium unlöslichen Niederschlag in eine gut filtrierbare From zu überführen. Bevorzugterweise wird als Fällungsmittel eine Verbindung aus der Gruppe Aluminiumoxid, welches saure Gruppen trägt, zugesetzt.

In einem abschließenden Verfahrensschritt wird das Reaktionsgemisch auf an sich bekannten Wegen von den ausgefallenen bzw. zugesetzten und nicht in Lösung gegangenen Feststoffen befreit und das Prepolymer -sofern erwünscht - isoliert. Dies geschieht nach aus dem Stand der Technik an sich bekannten Verfahren, beispielsweise dadurch, daß man die ausgefällten und zugesetzten Feststoffe, insbesondere die festen und nicht in Lösung gegangenen Zusätze aus den vorangehenden Verfahrensschritten, abfiltriert und damit eine klare organische, das gebildete und gereinigte Prepolymer enthaltende Phase erhält. Dazu kann - sofern erwünscht - ein Filtrationshilfsmittel oder auch mehrere von ihnen verwendet werden. Derartige Hilfsmittel wie Kieselgur, Perlit, Bentonit, Cellulosepulver und ähnliche Stoffe sind dem Fachmann ebenfalls bekannt und ihre Verwendung ist nicht Gegenstand der vorliegenden Erfindung.

Sofern erwünscht, ist es möglich, das Prepolymer aus der organischen Lösungsmittelphase zu isolieren. Dies geschieht in einfacher Weise dadurch, daß man unter ebenfalls aus dem Stand der Technik bekannten Verfahrensbedingungen, beispielsweise erhöhter Temperatur und vermindertem Druck, das Lösungsmittel aus dem gereinigten Reaktionsgemisch abdestilliert. Dabei wird dann das Prepolymer bzw. eine Mischung verschiedener Prepolymerer, wenn Mischungen von Ausgangsstoffen ein gesetzt wurden, in mehr oder weniger reiner Form erhalten.

Die erhaltenen Prepolymeren lassen sich aufgrund ihrer vorteilhaften Eigenschaften erfindungsgemäß besonders gut in selbsthärtenden Fugendichtungsmassen, die eine besonders gute Elastizität sowie besonders gute Dichtungseigenschaften aufweisen, verwenden. Es ist jedoch auch möglich, sie in selbsthärtenden Epoxidharzsystemen zu verwenden. Die Anwendungsbreite für die beiden genannten Verwendungen läßt sich dadurch in besonders vorteilhafter Weise steuern, daß man die Molekularmassen der als Ausgangsstoffe eingesetzten Alkylenoxidaddukte in Richtung zu höheren Molekulargewichten bei Verwendung für Fugendichtungsmassen bzw. in Richtung zu niedrigeren Molekulargewichten bei Verwendung für selbsthärtende Epoxidharzsysteme steuert. Dies kann beispielsweise über den Alkoxylierungsschritt geschehen. Eine andere Steuerungsmöglichkeit ergibt sich dadurch, daß auch unterschiedliche Thioalkancarbonsäuren zur Veresterung der oben näher beschriebenen Addukte eingesetzt werden können.

Durch das erfindungsgemäße Herstellungs-und Reinigungsverfahren werden also SH-terminierte Prepolymere erhalten, die - im Gegensatz zu den aus dem Stand der Technik bekannten Prepolymeren - keine sauren Anteile mehr enthalten. wie beschrieben, lassen sich die im Stand der Technik immer wieder als störend empfundenen sauren Bestandteile auf einfachstem Wege durch Neutralisation und anschließende Abtrennung der Neutralisationsprodukte entfernen. Dadurch erhält man Prepolymere, die mit den bekannten oxidischen Härtern, bei spielsweise Mangandioxid und/oder Bleidioxid, in den vernetzten zustand überführt werden können. durch oxidative Härtung derartiger Zweikomponenten-Mischungen werden kautschukelastische Massen erhalten, die hervorragende Eigenschaften in der Praxis aufweisen, insbesondere sehr Hydrolysestabil sind und die in der Praxis gestellten Forderungen an derartige elastische Dichtungsmassen in vollem Umfang erfüllen. Bei der Verwendung der erfindungsgemäß hergestellten und gereinigten SH-terminierten Prepolymere können auch weitere, aus dem Stand der Technik bekannte Zusätze verwedet werden, wie sie zur Einstellung bestimmter Praxiseigenschaften aus dem Stand der Technik bekannt sind. Derartige Zusätze verändern das Eigenschaftsbild nicht in negativer Weise, sondern tragen nur zu einer Anpassung der Verwendungseigenschaften an spezielle Anforderungen bei.

Die Erfindung wird durch die nachfolgenden Beispiele näher erläutert.

Beispiel 1

Herstellung des Prepolymeren

1 500 g eines Triols (Addukt von Propylenoxid an Glycerin, mittlere Molekularmasse: 2 500) und 164 g Thioglykolsäure wurden miteinander in der gleichen Volumenmenge Xylol gemischt und mit 1 %, bezogen auf die Gesamtmenge des Reaktionsgemisches, p-Toluolsulfonsäure versetzt. Unter Stickstoffatmosphäre wurde die Veresterung während 4 Stunden unter Sieden des Reaktionsgemisches vorgenommen, wobei das gebildete Wasser mit Hilfe eines Wasserabscheiders abgetrennt wurde. Nach 4 Stunden hatte sich die vorausberechnete Menge Wasser gebildet. Die Reaktionsmischung wurde auf Raumtemperatur abgekühlt und innerhalb von 5 min mit 20 %iger wäßriger Natronlauge neutralisiert. Danach wurden 180 g festes Natriumsulfat (wasserfrei) zugesetzt, gefolgt von 120 g saurem Aluminiumtrioxid. Nach 45 min gab man 30 g Kieselgur als Filtrierhilfsmittel zu, rührte 15 min kräftig und ließ die Feststoffe sich im Verlaufe von 1 1/2 Stunden absetzen. Nach Filtrieren wurde das Lösungsmittel bei geringfügig erhöhter Temperatur (35-45°C) im Vakuum abgezogen. Man erhielt 1590 g des gereinigten Prepolymeren mit den in Tabelle 2 wiedergegebenen Eigenschaften.

Beispiele 2 bis 3

Entsprechend dem in Beispiel 1 beschriebenen Herstellungsverfahren wurden weitere Prepolymere hergestellt; die eingesetzten Mengen an Triol (Addukt von Propylenoxid an Gylcerin) bzw. Thioglykolsäure (TGS) sowie die angewendeten Reaktionsbedingungen sind der nachfolgenden Tabelle 1 zu entnehmen.

Tabelle 1

Gemäß der in Beispiel 1 beschriebenen Verfahrensweise hergestellte Prepolymere aus

| Bsp. | Makrotriol Menge (g) | ($\bar{M}$)[1] | Menge an TGS[2] (g) | LM | Reaktionszeit (Stunden) |
|---|---|---|---|---|---|
| 1 | 1 500 | 2 500 | 164 | Xylol | 4 |
| 2 | 1 550 | 4 040 | 110 | Toluol | 4 |
| 3 | 500 | 5 500 | 28 | Xylol | 5 |

Anmerkungen: [1] $\bar{M}$ = mittlere Molekularmasse
[2] TGS = Thioglykolsäure

Die erhaltenen Produkte weisen die in der nachfolgenden Tabelle 2 angegebenen Eigenschaften auf:

Tabelle 2

| Bsp. | Viskosität (Brookfield) | Säurezahl mg KOH/1g Substanz | Mercaptan-Gehalt (%) |
|---|---|---|---|
| 1 | 600 mPa.s | 0,5 | 2,9 |
| 2 | 1150 mPa.s | 0,2 | 1,6 |
| 3 | 2600 mPa.s | 0,1 | 1,1 |

Beispiel 4

Verwendung der gemäß Beispiele 1 bis 3 hergestellten Polymercaptane in Dichtungsmassen

Die entsprechend dem erfindungsgemäßen Verfahren hergestellten Polymercaptane der Beispiele 1 bis 4 wurden in Formulierungen nachfolgender Rezeptur verwendet (Prozentangaben in Gewichtsprozent):

(a) Polymercaptan: 30 %;
(b) Weichmacher : 20 %;
(c) Kreide : 40 %;
(d) $TiO_2$ : 10 %.

Zu 100 Gew.-Teilen einer derartigen Grundformulierung wurden 5 Gew.-Teile einer $MnO_2$ -Paste als zweite Komponente gegeben. Aus einer derartigen Mischung wurden

(1) für die Bestimmung der Shore-A-Härte Probekörper mit einer Schichtdicke von 15 mm und einem Durchmesser von 45 mm sowie

(2) für den Reißfestigkeitstest Probekörper mit den Abmessungen 20 mm x 4 mm x 2 mm (Länge, Breite, Tiefe)

hergestellt.

Die Bestimmung der Shore-A-Härte mit den oben beschriebenen Probekörpern erfolgte nach DIN 53 505; die Bestimmung der Reißfestigkeit sowie der Bruchdehnung (Zugversuch) erfolgte nach DIN 53 504.

Es wurden jeweils Probekörper erhalten, die nach ihrer Aushärtung keine Oberflächenklebrigkeit aufwiesen.

Die Ergebnisse sind der nachfolgenden Tabelle 3 zu entnehman.

Tabelle 3

Bestimmung der mechanischen Eigenschaften von unter Verwendung der erfindungsgemäß hergestellten Polymercaptane hergestellten Dichtungsmassen

| Polymercaptan aus Bsp. | Viskosität des Prepolymers (mPa.s) | Shore-A-Härte | Reißfestigkeit/Reißdehnung ($N.mm^{-2}$/%) |
|---|---|---|---|
| 1 | 500 | 40-50 | 0,84/90 - 10/75 |
| 2 | 1 100 | 21-23 | 0,89/550 |
| 3 | 1 850 | 15-25 | 1,05/900 |

Beispiel 6

Verwendung der erfindungsgemäß hergestellten Polymercaptane in selbsthärtenden Expoxidharzsystemen

Jeweils 100 g des gemäß der Herstellungsweise in Beispiel 1 erhaltenen Produktes, denen 5 g Benzyldimethylamin als Katalysator zugegeben wurden, wurden mit 30 g (Beispiel 6a) und 15 g (Beispiel 6b) eines Bisphenol-A-Derivats (Epoxidäquivalentgewicht 195) versetzt. Aus der Mischung wurden in Polyethylenschalen Probekörper mit 15 mm Schichtdicke und 45 mm Durchmesser geformt. Die Probekörper wurden 24 h bei 50°C ausgehärtet. Danach wurde nach DIN 53 505 die Shore-A-Härte bestimmt. Für den 1. Probekörper wurde eine Shore-A-Härte von 17, für den 2. Probekörper eine Shore-A-Härte von 41 bestimmt.

**Ansprüche**

1. Verfahren zur Herstellung und Reinigung SH-terminierter Prepolymerer durch Umsetzung von Polyhydroxyverbindungen mit Thioalkancarbonsäuren, dadurch gekennzeichnet, daß man

(a) ein oder mehrere Addukte von Ethylenoxid und/oder Propylenoxid an Triole oder Tetraole der allgemeinen Formel (I)

$$H[O(CH_2)_m]_p-\underset{\underset{OH}{|}}{\underset{(CH_2)_m}{|}}\overset{\overset{OH}{|}}{\overset{(CH_2)_m}{\overset{|}{C}}}-(CH_2)_nOH \qquad (I)$$

in der
m für die Zahlen 1, 2 oder 3,
n für die Zahlen 0, 1 oder 2 und
p für 0 oder 1 stehen,
mit einer Molekularmasse im Bereich von 400 bis 10 000 mit einer oder mehreren Thioalkancarbonsäuren der allgemeinen Formel (II)

HS-R-COOH (II)

in der R für einen geradkettigen oder verzweigten Alkylenrest mit 1 bis 8 C-Atomen steht, in einem solchen Molverhältnis umsetzt, daß 1 mol der Thioalkancarbonsäuren (II) einem Äquivalent der OH-Gruppen in der Verbindung (I) gegenübersteht,

(b) der Reaktionsmischung ein Neutralisationsmittel in einer Menge zusetzt, die geeignet ist, die nicht umgesetzte Menge der Thioalkancarbonsäure (II) zu neutralisieren,

(c) gleichzeitig mit dem Zusatz des Neutralisationsmittels oder unmittelbar danach eine oder mehrere das Neutralisationswasser bindende Verbindungen sowie ein im Reaktionsmedium unlösliches, oberflächlich sauer modifiziertes, die Koagulation förderndes Hilfsmittel im Überschuß zusetzt, und

(d) das REkationsgemisch auf an sich bekannten Wegen von den ausgefallenen und zugesetzten Feststoffen befreit und das Prepolymer gewünschtenfalls isoliert.

2. Verfahren nach Anspruch 1, dadurch gekennzeichnet, daß man ein oder mehrere Addukte von Propylenoxid an Triole oder Tetraole der allgemeinen Formel (I) mit einer oder mehreren Thioalkancarbonsäuren der allgemeinen Formel (II) umsetzt.

3. Verfahren nach Ansprüchen 1 und 2, dadurch gekennzeichnet, daß man ein oder mehrere Addukte von Propylenoxid an Triole oder Tetraole der allgemeinen Formel (I) mit einer Molekularmasse im Bereich von 2 000 bis 7 000 mit einer oder mehreren Thioalkancarbonsäuren der allgemeinen Formel (II) umsetzt.

4. Verfahren nach Ansprüchen 1 und 2, dadurch gekennzeichnet, daß man ein oder mehrere Addukte von Propylenoxid an Triole oder Tetraole aus der Gruppe Glycerin, Trimethylolpropan und Pentaerythrit, bevorzugt an Glycerin, mit einer oder mehreren Thioalkancarbonsäuren der allgemeinen Formel (II) umsetzt.

5. Verfahren nach Ansprüchen 1 bis 4, dadurch gekennzeichnet, daß man ein oder mehrere Addukte von Propylenoxid an Triole oder Tetraole aus der Gruppe Glyce rin, Trimethylolpropan und Pentaerythrit, bevorzugt an Glycerin, mit einer Molekularmasse im Bereich von 2 000 bis 7 000 mit einer oder mehreren Thioalkancarbonsäuren der allgemeinen Formel (II) umsetzt.

6. Verfahren nach Ansprüchen 1 bis 5, dadurch gekennzeichnet, daß man eine Thioalkancarbonsäure der allgemeinen Formel (II) verwendet, in der R für einen geradkettigen Alkylrest mit 1 bis 8 C-Atomen steht.

7. Verfahren nach Anspruch 6, dadurch gekennzeichnet, daß man eine Thioalkancarbonsäure der allgemeinen Formel (II) verwendet, in der R für einen geradkettigen Alkylenrest mit 1 bis 4 C-Atomen steht.

8. Verfahren nach Ansprüchen 6 und 7, dadurch gekennzeichnet, daß man als Thioalkancarbonsäure (II) Thioglykolsäure verwendet.

9. Verfahren nach Ansprüchen 1 bis 8, dadurch gekennzeichnet, daß man die Umsetzung der Ethylenoxid-bzw. Propylenoxid-Addukte an Triole oder Tetraole der allgemeinen Formel (I) mit einer oder mehreren Thioalkancarbonsäuren der allgemeinen Formel (II) in einem Lösungsmittel, das ein Azeotrop mit Wasser bildet, durchführt.

10. Verfahren nach Ansprüchen 1 bis 9, dadurch gekennzeichnet, daß man das Prepolymer durch Abdestillieren des Lösungsmittels isoliert.

11. Verwendung der entsprechend dem Verfahren nach Ansprüchen 1 bis 10 erhältlichen Prepolymeren in selbsthärtenden Fugendichtungsmassen.

12. Verwendung der entsprechend dem Verfahren nach Ansprüchen 1 bis 10 erhältlichen Prepolymeren in selbsthärtenden Epoxidharzsystemen.